(19) Europäisches Patentamt
European Patent Office
Office européen des brevets

(11) Publication number: **0 026 295**
**B1**

# (12) EUROPEAN PATENT SPECIFICATION

(45) Date of publication of patent specification: **20.04.83**

(21) Application number: **80104514.7**

(22) Date of filing: **30.07.80**

(51) Int. Cl.³: **C 07 C 69/54,**
C 07 C 67/287,
C 08 F 220/18

## (54) Process for preparing chlorinated cycloaliphatic (meth)acrylate compositions, a copolymer containing them, and 2,3-dichloro dicyclopentadiene (meth)acrylate.

(30) Priority: **30.07.79 US 62198**

(43) Date of publication of application:
**08.04.81 Bulletin 81/14**

(45) Publication of the grant of the patent:
**20.04.83 Bulletin 83/16**

(84) Designated Contracting States:
**BE DE FR GB IT NL**

(56) References cited:
**EP - A - 0 003 012**
**DE - A - 1 443 740**
**DE - A - 2 635 122**
**DE - A - 2 714 538**
**GB - A - 1 299 446**
**US - A - 3 650 885**

(73) Proprietor: **THE DOW CHEMICAL COMPANY**
**Dow Center 2030 Abbott Road Post Office Box 1967**
**Midland Michigan 48640 (US)**

(72) Inventor: **Friedli, Hans Ruedi**
**302 Linden Lane**
**Lake Jackson Texas (US)**
Inventor: **Boriack, Clinton James**
**Route 3, 403 Sailfish Street**
**Freeport Texas (US)**

(74) Representative: **Weickmann, Heinrich, Dipl.-Ing. et al,**
**Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska**
**Möhlstrasse 22**
**D-8000 München 86 (DE)**

**EP 0 026 295 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Process for preparing chlorinated cycloaliphatic (meth)acrylate compositions, a copolymer containing them, and 2,3-dichloro dicyclopentadiene (meth)acrylate.

This invention relates to a process for preparing chlorinated cycloaliphatic (meth)acrylate compositions which are the complex reaction products of chlorine with cycloaliphatic (meth)acrylate compositions.

It is known from European Patent Application No. 3012, filed January 2, 1979, that cycloaliphatic (meth)acrylate compositions can be produced by reacting a crude dicyclopentadiene with acrylic acid or methacrylic acid in the presence of a Friedel-Crafts catalyst such as $BF_3$. These compounds have the sharp, penetrating "acrylate" odor.

Pure dicyclopentadiene acrylate (hereafter DCPDA) is known from U.S. Patent 2,414,089, issued January 14, 1947 to Bruson. These materials have an unpleasant, acrylate odor which renders them unsatisfactory for numerous applications, for example, in the formulation of inks.

The preparation of 2,3-dibromo DCPDA is known from U.S. Patent 3,143,535, issued August 4, 1964, to Jackson et al. The dibromo compound is very dense and viscous, which is disadvantageous for numerous applications.

The disadvantages of these prior materials have been substantially overcome by the product of the present invention which is a process for preparing Chlorinated cycloaliphatic acrylate or methacrylate compositions characterized in that chlorine is reacted with a cycloaliphatic acrylate or methacrylate composition containing

(A) 60 to 100 percent by weight of dicyclopentadiene acrylate, dicyclopentadiene methacrylate, or mixtures thereof,

(B) 0 to 15 percent by weight of a mixture of polycyclopentadienyl acrylates of the formula

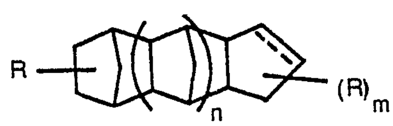

where R is $CH_2 = CZC(O)—O—$; Z is H or methyl; n is 1 or 2; m is 0 or 1 and when m is 0 there is a double bond present,

(C) 0 to 21 percent by weight of a mixture of the copolymers of methacrylic acid or acrylic acid with adducts of cyclopentadiene with isoprene, piperylene, methylcyclopentadiene, or mixtures thereof, and

(D) 0 to 10 weight percent of a mixture of polyacrylates having the repeating unit:

$$\begin{array}{c} —CH_2—CZ— \\ \quad\;\; | \\ \quad\;\; C{=}O \\ \quad\;\; | \\ \quad\;\; OR' \end{array}$$

where R′ is hydrogen or 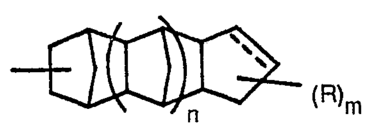

R is $CH_2{=}CZ–C(O)—O—$; Z is hydrogen or methyl; n is 0, 1 or 2; and m is 0 or 1 and when m is 0 there is a double bond present in the cyclopentadienyl group, whereby said reaction product has substantially all the original acrylic unsaturation, substantially no remaining cycloolefinic unsaturation and has 1 to 3 chlorine atoms attached to the original cyclopentene ring.

The preferable ranges of the above components are 70 to 95 percent by weight of (A), 5 to 15 percent by weight of (B), 0.5 to 15 percent by weight of (C) and 0.05 to 5 percent of weight of (D).

The compositions of this invention are useful as monomers or comonomers in thermosetting resins or thermoplastics. They are also useful to form metal coatings with good adhesion, laminates and inks since they are curable by ultraviolet light. The instant compositions have a pleasant fruity odor and their polymeric products are odor-free.

The main reactants used in the process of this invention are dicyclopentadiene acrylate or the products set forth in the aforementioned European Patent Application No. 3012, which are referred to hereinafter as cycloaliphatic acrylates (CAC) and methacrylate (CMC) compositions.

These CAC or CMC compositions are chlorinated with chlorine gas at temperatures in the range from about –30° to about 50°C and preferably in the range –20° to 20°C in the presence of an inert solvent.

Useful solvents are those that are not attacked by chlorine under the reaction conditions and are

easily removed. Examples are halogenated solvents, such as methylene chloride, carbon tetrachloride, chloroform, methylchloroform, fluorocarbons, and benzene.

If desired, the use of a solvent can be eliminated. However, the reaction is more difficult to carry out because of poor mixing and heat removal, and the temperature must be raised to the range 0—20°C in order to reduce the viscosity.

After chlorination, the reaction products are washed with water several times. The solvents are removed by vacuum distillation and the polymerization of the product during the distillation step is prevented or inhibited by the use of a small amount of a polymerization inhibitor such as tertiary butyl catachol, hydroquinone, or phenothiazine. Generally, 50—300 parts per million of the polymerization inhibitor will be used.

The chlorinated compositions prepared herein are useful to make polymers alone or in combination with unsaturated monomers or unsaturated resins.

Examples of unsaturated monomers which are polymerizable with the present compositions are acrylates and haloacrylates, vinyl aromatics such as styrene, alpha methyl styrene, halo styrenes, vinyltoluene, and divinyl benzene; allyl compounds such as diallyl phthalate or allyl alcohol; olefins such as butene and diolefins such as butadiene, as well as halogenated olefins and vinyl cyanide.

Examples of unsaturated resins which are polymerizable with the present compositions are unsaturated polyester resins, vinylester resins as described in U.S. Patent 3,594,247, issued to Pennington et al., July 20, 1971, polybutadiene and polyisoprene and styrene/butadiene copolymers.

Polymerization is accomplished by a free radical mechanism, i.e., using free radical catalysts, including initiation by electron and ultraviolet irradiation.

The above thermosetting resins can be blended with an ethylenically unsaturated monomer mixture copolymerizable with the unsaturated polymers. The mixture comprises vinyl aromatic monomers such as styrene, alpha- -methyl styrene, chlorostyrene, vinyl toluene, divinyl benzene, and diallyl phthalate with about 5 to about 90 weight percent of the chlorinated compositions of this invention.

The thermosetting blends with the unsaturated monomer mixture contain 20 to 70 percent by weight and preferably 30 to 50 percent by weight of the monomer mixture based on the weight of the resin. A small amount of inhibitor such as tertiary butyl catechol or hydroquinone is added to this mixture. The amount added is generally in the range from 50—300 parts per million based on the amount of unsaturated monomer.

The final blend is a cross-linkable resin composition which is useful to make laminates.

Laminates are made by mixing into the cross-linkable composition free radical-forming catalysts and adding this mixture to a suitable fibrous substrate such as asbestos fibers, carbon fibers, fibrous glass, or inorganic fibers. Examples of these catalysts are benzoyl peroxide, tertial butyl peroxide and methylethylketone peroxide. It is also of value to add accelerators such as cobalt naphthenate or dimethyl aniline.

The cross-linkable composition is rolled, sprayed or impregnated into the fibrous reinforcement such as fibrous glass and cured in a manner well-known in the art. When fibrous glass is used, it can be in any form such as chopped strands, filaments, glass ribbons, glass yarns, or reinforcing mats.

The following examples illustrate the invention.

## Example 1

In a 3-necked, 2,000-ml round-bottom flask, 377.3 g (1.801 g-moles) of a cycloaliphatic acrylate composition (CAC) prepared as in European Patent Application No 3012, filed January 2, 1979, and 1200 ml methylene chloride (1:3.4 volume ratio) were mixed and cooled to —10°C. The flask was equipped with a mechanical stirrer, a thermometer, a chlorine inlet, a vent, and a bath capable of maintaining the reaction temperature at —10° to —20°C during chlorine addition.

The CAC contained 90 percent DCPDA and 10 percent heavy acrylates, and a small amount of acrylate polymer (about 0.2 percent). The heavy acrylates consisted predominantly of tri- and tetracyclopentadiene acrylates and of DCPD diacrylate. The diluted CAC's were chlorinated with 140.5 g (1.98 g-moles) of chlorine over a period of 75 minutes while agitating the solution vigorously. The isolation of product consisted of 3 washes with distilled water, followed by solvent recovery under vacuum. Before solvent removal, 200 ppm of t-butyl catechol (TBC) based on monomer were added.

The composition of the resultant product is listed in Table 1. The products were identified by gas chromatography and mass spectroscopy and the principal components are the dichlorides of di-, tri- and tetracyclopentadiene acrylate formed by the chlorination of the cyclopentene bond. The finished product has about the same amber color as the starting material, but the odor level is reduced and the odor quality is pleasantly fruit-like.

## Example 2

Following the procedure outlined in Example 1, the same CAC was chlorinated with less solvent dilution. 200 g of CAC (0.954 g-mole) were mixed with 300 ml of carbon tetrachloride (1:1.6 volume ratio) and reacted with 63.1 g (0.89 g-mole) of chlorine at —20°C. Upon purification as in Example 1, a slightly more viscous material of a composition listed in Table 1 was obtained. The color and odor characteristics were as in Example 1.

TABLE 1
Chlorination of CAC's in Solvents

| Example | 1 | 2 |
|---|---|---|
| Ratio of Solvent to Chlorinated Product, by volume | 1:3.4 $CH_2Cl_2$ | 1:1.6 $CCl_4$ |
| DCPDA Conversion | ~100% | ~100% |
| Reaction Temperature | –10°C | –20°C |
| Products Obtained, Wt.% | | |
| DCPDA | 0.8 | 0.2 |
| $Cl_1$DCPDA | 1.2 | 1.6 |
| $Cl_2$DCPDA | 78.6 | 77.0 |
| ($Cl_{3-4}$DCPDA and $Cl_{1-4}$DCPDA—H)* | 13.5 | 20.0 |
| Unidentified | 5.9 | 1.4 |

*Includes chlorination products of heavy acrylates and $Cl_{3-4}$ products of DCPDA.

Example 3

Following the procedure of Example 1, 50 g (0.2 g-mole) of a cycloaliphatic composition (CAC) was chlorinated at –20°C in 300 ml methylene chloride (1:6 volume ratio) using 20 g gaseous chlorine (0.28 g-mole). The composition of the CAC used was 79.9 percent DCPDA, 11.1 percent polycyclopentadienyl acrylates (DCPDA—H) and about 9 percent of oligomers of acrylic acid with codimers of cyclopentadiene with isoprene, piperylene and methylcyclopentadiene, and small amounts of acrylate polymers. Work-up and product stabilization was as described in Example 1.

The product had a density of 1.29 g/cm³ at 25°C and a Gardner color of 8—9. Its odor was faint and pleasant.

Example 4

In a 3-necked, 5,000-ml round-bottom flask, 855 g (4.16 g-moles) of DCPDA (98 percent pure) were mixed with 2400 ml of methylene chloride (1:3 volume ratio). The flask was equipped with a mechanical stirrer, a thermometer, a chlorine feed line and a vent. The mixture was cooled to –20°C and 299 g (4.217 g-moles) of chlorine were added over a one-hour period. Product isolation and recovery consisted of three washes with distilled water, addition of 200 ppm t-butyl catachol (TBC) and removal of the solvent under vacuum..

The final product had the composition listed in Table 2. The conversion of DCPDA was essentially complete and the principal product was 2,3-dichloro DCPDA. The product was a colorless liquid with a very low vapor pressure and a faint but pleasant odor. Proton magnetic resonance spectra indicated that the acrylate function was unchanged.

Example 5

Following the procedure of Example 4, a solution of 189.5 g (0.92 g-mole) of DCPDA (98 percent pure) and 300 ml of carbon tetrachloride (1:1.68 by volume) was chlorinated at +20°C with 74.65 g (1.05 g-moles) of chlorine. Results are given in Table 2.

Again, essentially complete conversion of DCPDA was achieved and dichloro DCPDA was the principal product, although its selectivity was significantly lower. Color and odor characteristics were essentially unchanged in comparison to Example 4.

Example 6

Chlorination of DCPDA (98 percent pure) without a solvent at –20°C was difficult to carry out because of the high viscosity which led to poor mixing and heat removal. However, it was possible to reach essentially complete DCPDA conversion in the temperature range of 0—20°C. The product distribution was much changed in comparison with Examples 4 and 5 as indicated in Table 2.

TABLE 2
Chlorination of pure DCPDA

| Example | 4 | 5 | 6 |
|---|---|---|---|
| Ratio of Solvent to Chlorinated Product, by volume | 1:3.0 $CH_2Cl_2$ | 1:1.63 $CCl_4$ | None |
| DCPDA Conversion | ~100% | 98.5% | ~100% |
| Reaction Temperature | 10°C | +20°C | 0—20°C |
| Products Obtained, Wt. % | | | |
| DCPDA | 0.2 | 1.5 | ~0 |
| $Cl_1$DCPDA | 5.6 | 20.8 | ~10 |
| $Cl_2$DCPDA | 88.6 | 63.3 | ~60 |
| $Cl_{3-4}$DCPDA | 5.3 | 13.3 | ~30 |
| Unidentified | 0.7 | 1.1 | — |

Examples 7 & 8

Using the procedure of Example 4, 106.2 g (0.517 g-mole) of DCPDA (98 percent pure) and 600 ml methylene chloride (1:6 volume ratio) were chlorinated at −20°C to a DCPDA conversion level of 53 and 74 percent, respectively. The composition of the resulting chlorinated products, expressed as free of DCPDA, is given in Table 3.

TABLE 3
Chlorination of DCPDA: Effect of conversion level on product composition

| Example | 7 | 8 |
|---|---|---|
| Ratio of Solvent to Chlorinated Product, by volume | 1:6 $CH_2Cl_2$ | 1:6 $CH_2Cl_2$ |
| DCPDA Conversion | 53% | 74% |
| Reaction Temperature | −20°C | −20°C |
| Products Obtained, Wt.% | | |
| $Cl_1$DCPDA | 4.9 | 4.9 |
| $Cl_2$DCPDA | 92.7 | 93.8 |
| $Cl_{3-4}$DCPDA | 0.8 | 1.7 |
| Unidentified | 0.4 | 0.7 |

The results shown in Table 3 indicate that the product distribution is not significantly affected by the conversion level. Again the dichloride is the principal product.

Example 9 — Isolation and Characterization of $Cl_2$DCPDA

The products from Example 4 were chosen for isolation and characterization of the principal product.

2,3-Dichloro dicyclopentadiene acrylate was isolated by fractional vacuum distillation. The boiling point at 40 Pa (0.3 Torr). pressure is 140°C. The structure was confirmed by infrared and nuclear magnetic resonance spectroscopy, as well as by mass spectroscopy, using ionization by electron impact and chemical ionization.

Example 10

Following the general procedure of Example 1, 53.3 g (0.24 g-mole) of a cycloaliphatic product consisting of 93 percent dicyclopentadiene methacrylate (DCPDM), 7 percent of mostly tri- and tetracyclopentadiene methacrylate and dicyclopentadiene (DCPD) dimethacrylate and 0.1—0.3 percent acrylate polymer were diluted to a 1:6 volume ratio with methylene chloride (300 ml). Chlorine gas (17.5 g, 0.25 g-mole) was added at −20°C over a period of 53 minutes. The products were recovered as in Example 1. 2,3-Dichloro dicyclopentadiene methacrylate can be recovered in the pure form by vacuum distillation of these products as in Example 9.

Example 11

In a manner similar to Example 10, 107.3 g (0.483 g-mole) of the same product were dissolved in 150 ml methylene chloride (volume ratio 2:3) and chlorinated at −20°C with 38 g (0.536 g-mole) of chlorine over a period of 111 minutes. The products were recovered as in Example 1.

The final products from Examples 10 and 11 had gas chromatographic patterns very similar to the corresponding acrylate materials. Again the product consisted predominantly of the dichloride formed by the addition of chlorine to the cyclopentene double bond to the exclusion of the acrylate bond. As with the CAC products, the selectivity to dichloride was higher at the higher dilution level and the odor decreased and the odor quality improved upon chlorination. The compositions for the examples are listed in Table 4.

TABLE 4
Chlorination of CMC at two dilution levels

| Example | 10 | 11 |
|---|---|---|
| Ratio of Solvent to Chlorinated Product, by volume | 1:6 $CH_2Cl_2$ | 2:3 $CH_2Cl_2$ |
| Conversion of CMC | ~100% | ~100% |
| Reaction Temperature | −20°C | −20°C |
| Products Obtained, wt.% | | |
| DCPDM | 0.2 | 0.2 |
| $Cl_1$DCPDM | 3.7 | 5.5 |
| $Cl_2$DCPDM | 83.0 | 76.5 |
| ($Cl_{3-4}$DCPDM and $Cl_{1-4}$DCPDM—H)* | 13.0 | 16.0 |
| Unidentified | 0.1 | 1.8 |

*Includes chlorination products of heavy methacrylates and $Cl_{3-4}$ products of DCPDM.

Example 12

Chlorinated DCPDA (Examples 4 and 6) and chlorinated CAC (Example 1) homopolymerized rapidly by free radical and photo initiation. The former took place whenever inhibition was insufficient or when free radical initiators were added.

For all three compositions, ultraviolet photo initiation and rapid cure were obtained when thin films, i.e., 0.2—0.3 ml (0.05—0.0075 mm) on steel or aluminum panels were passed under a 200

watt-U.V. lamp at 100 feet/minute (30.5 m/min) line speed. 3—4 Passes were required to obtain odor- and mar-free coatings with excellent adhesion. Two suitable initiator systems are 3 percent benzoin butyl ether or a combination of 3 percent diethoxyacetophenone and 2 percent methyl diethanolamine.

Example 13

Chlorinated DCPDA (Example 6) and chlorinated CAC (Example 1) were mixed with commercial vinyl ester resins in a 1:1 weight ratio. Rapid polymerization to copolymers occurred during 3—4 passes under a 200 watt/linear inch (2.54 cm) mercury arc lamp at 100 feet/minute (30.5 m/min) line speed using 3 percent diethoxyacetophenone and 2 percent diethanolamine as the photo initiator system. The resultant coatings were odor-free and had good solvent and mar resistance and excellent adhesion.

Example 14

Chlorinated DCPDA similar to the one prepared in Example 5 was blended in a 50/50 weight ratio with the same commercial vinyl ester resin as was used in Example 13. SPI gel time and cure time were 40.6 and 45.0 minutes, respectively, and the maximum exotherm was 163°C when 1 percent benzoyl peroxide was used as the initiator. 1/8" (0.32 cm) Clear castings were produced and baked for 8 hours at 150°C. Standard specimen were cut for limiting oxygen index (LOI) testing in accordance with ASTM D—2863. The LOI rating was 23—24 as compared to 21 for a control with non-chlorinated DCPDA. This indicates resistance to burning under laboratory conditions.

**Claims**

1. A process for preparing halogenated cycloaliphatic acrylate or methacrylate compositions characterized in that chlorine is reacted with a cycloaliphatic acrylate or methacrylate composition containing

(A) 60 to 100 percent by weight of dicyclopentadiene acrylate, dicyclopentadiene methacrylate, or mixtures thereof,

(B) 0 to 15 percent by weight of a mixture of polycyclopentadienyl acrylates of the formula

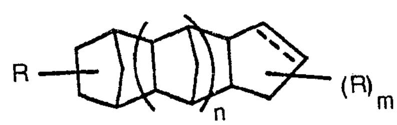

where R is $CH_2{=}CZC(O){-}O{-}$; Z is H or methyl; n is 1 or 2; m is 0 or 1 and when m is 0 there is a double bond present,

(C) 0 to 21 percent by weight of a mixture of the copolymers of methacrylic acid or acrylic acid with adducts of cyclopentadiene with isoprene, piperylene, methylcyclopentadiene, or mixtures thereof, and

(D) 0 to 10 weight percent of a mixture of polyacrylates having the repeating unit:

$$-CH_2-CZ- \\ | \\ C{=}O \\ | \\ OR'$$

where R' is hydrogen or 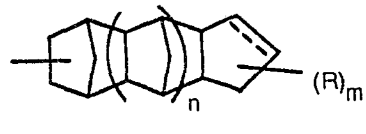

R is $CH_2{=}CZ{-}C(O){-}O{-}$; Z is hydrogen or methyl; n is 0, 1 or 2; and m is 0 or 1 and when m is 0 there is a double bond present in the cyclopentadienyl group, whereby said reaction product has substantially all the original acrylic unsaturation, substantially no remaining cycloolefinic unsaturation and has 1 to 3 chlorine atoms attached to the original cyclopentene ring.

2. The process of Claim 1 and further characterized in that the composition, reacted with chlorine, contains 70 to 95 percent by weight of A, 5 to 15 percent by weight of B, 0.5 to 15 percent by weight of C, and 0.05 to 5 percent by weight of D.

3. The process of Claim 1 and further characterized in that the reaction of chlorine with said cycloaliphatic acrylate or methacrylate composition is conducted at a temperature in the range from −30° to 50°C.

4. The process of Claim 1 and further characterized in that the reaction is conducted in the presence of an inert solvent.

5. 2,3-Dichloro dicyclopentadiene acrylate.

6. 2,3-Dichloro dicyclopentadiene methacrylate.

7. A copolymer of a chlorinated cycloaliphatic acrylate or methacrylate characterized in that it consists of the composition prepared by the process of Claim 1 copolymerized with an acrylate, vinyl aromatic, olefin or diolefin.

8. A copolymer of a chlorinated cycloaliphatic acrylate or methacrylate characterized in that it consists of the composition prepared by the process of Claim 1 copolymerized with an unsaturated resin comprising a vinyl ester resin having terminal unsaturation or an unsaturated polyester resin and a vinyl aromatic monomer.

9. The resin composition of Claim 8 characterized in that the unsaturated resin is a vinyl ester resin having terminal unsaturation.

10. The resin composition of Claim 8 characterized in that the unsaturated resin is an unsaturated polyester resin.

**Revendications**

1. Procédé pour la préparation de compositions d'acrylates ou de méthacrylates cycloaliphatiques halogénés, caractérisé par le fait que le chlore est mis à réagir avec une composition d'acrylate ou de méthacrylate cycloaliphatique contenant

(A) 60 à 100% en poids, de dicyclopentadiène-acrylate, de dicyclopentadiène-méthacrylate, ou leurs mélanges.

(B) 0 à 15% en poids, d'un mélange de polycyclopentadiényl-acrylates de formule

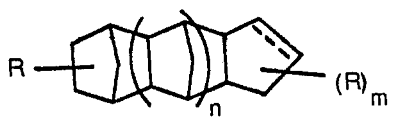

ou R est $CH_2$=CZC(O)—O—; Z est H ou un group méthyle; n est 1 ou 2; m est 0 ou 1, et quand m est 0, il y a une double liaison présente.

(C) 0 à 21% en poids, d'un mélange des copolymères d'acide méthacrylique ou d'acide acrylique avec des adducts de cyclopentadiène avec l'isoprène, le pipérylène, le méthylcyclopentadiène ou leurs mélanges, et

(D) 0 à 10% en poids, d'un mélange de polyacrylates ayant l'unité recurrente

—$CH_2$—CZ—
|
C=O
|
OR'

où R' est de l'hydrogène, ou

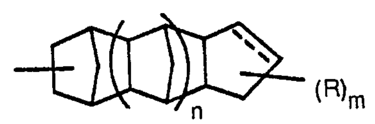

R est $CH_2$=CZ—C(O)—O—; Z est de l'hydrogène ou le groupe méthyle; n est 0, 1 ou 2; et m est 0 ou 1, et quand m est 0 il y a une double liaison présente dans le groupe cyclopentadiényle, grâce à quoi ledit produit de réaction a sensiblement toute l'insaturation acrylique initiale, presque pas d'insaturation cyclo-oléfinique restante, et a 1 à 3 atomes de chlore liè au noyau cyclopen initial.

2. Procédé selon la revendication 1, et encore caractérisé par le fait que la composition qui a réagi avec le chlore, contient 70 à 95% en poids de A, 5 à 15% en poids de B, 0,5 à 15% de C, et 0,05 à 5% en poids de D.

3. Procédé selon la revendication 1, et encore caractérisé par le fait que la réaction du chlore avec ladite composition d'acrylate ou de méthacrylate cycloaliphatique est effectuée à une température allant de −30°C à 50°C.

4. Procédé selon la revendication 1, et encore caractérisé par le fait que la réaction est effectuée en présence d'un solvant inerte.

5. 2,3-dichloro-dicyclopentadiène-acrylate.

6. 2,3-dichloro-dicyclopentadiène-méthacrylate.

7. Copolymère d'un acrylate ou d'un méthacrylate cycloaliphatique chloré, caractérisé par le fait qu'il est constitué par la composition préparée par le procédé de la revendication 1, copolymérisée avec un acrylate, un composé vinylaromatique, une oléfine ou une dioléfine.

8. Copolymère d'un acrylate ou d'un méthacrylate cycloaliphatique chloré, caractérisé par le fait qu'il est constitué par la composition préparée par le procédé de la revendication 1, copolymérisée avec une résine insaturée comprenant une résine d'ester vinylique à insaturation terminale, ou une résine de polyester insaturé et un monomère vinylaromatique.

9. Composition de résine selon la revendication 8, caractérisée par le fait que la résine insaturée est une résine d'ester vinylique à insaturation terminale.

10. Composition de résine selon la revendication 8, caractérisé par le fait que la résine insaturée est une résine de polyester insaturé.

## Patentansprüche

1. Verfahren zur Herstellung von halogenierten cycloaliphatischen Acrylat- oder Methacrylatzusammensetzungen, dadurch gekennzeichnet, daß Chlor mit einer cycloaliphatischen Acrylat- oder Methacrylatzusammensetzung reagiert, die

(A) 60 bis 100 Gew.-% Dicyclopentadienacrylat, Dicyclopentadienmethacrylat oder Mischungen davon,

(B) 0 bis 15 Gew.-% einer Mischung von Polycyclopentadienylacrylaten mit der allgemeinen Formel

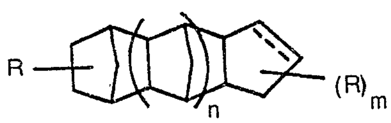

worin R $CH_2$=CZC(O)—O—, Z H oder eine Methylgruppe ist, n 1 oder 2 ist, m 0 oder 1 ist und die, falls m 0 ist, eine Doppelbindung enthält,

(C) 0 bis 21 Gew.-% einer Mischung von Copolymeren von Methacrylsäure oder Acrylsäure mit Addukten von Cyclopentadien mit Isopren, Piperylen, Methylcyclopentadien oder Mischungen davon, und

(D) 0 bis 10 Gew.-% einer Mischung von Polyacrylaten, die als sich wiederholende Einheit:

$$-CH_2-\underset{\underset{\displaystyle OR'}{|}}{\overset{}{\underset{\underset{\displaystyle C=O}{|}}{CZ}}}-$$

aufweisen, worin R' Wasserstoff ist oder 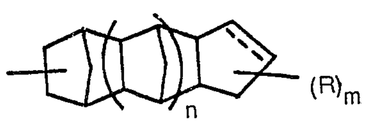

R $CH_2$=CZ—C(O)—O— ist, Z Wasserstoff oder eine Methylgruppe ist, n 0, 1 oder 2 ist und m 0 oder 1 ist und die, falls m = 0 ist, eine Doppelbindung in der Cyclopentadienylgruppe enthält, wobei dieses Reaktionsprodukt weitgehend alle ursprünglichen acrylisch ungesättigten Gruppen enthält, weitgehend keine verbleibenden cycloolefinisch ungesättigten Gruppen enthält und 1 bis 3 Chloratome am ursprünglichen Cyclopentenring trägt.

2. Verfahren nach Anspruch 1, dadurch gekennzeichnet, daß die Zusammensetzung, die mit Chlor reagiert, 70 bis 95 Gew.-% von A, 5 bis 15 Gew.-% von B, 0,5 bis 15 Gew.-% von C und 0,05 bis 5 Gew.-% von D enthält.

3. Verfahren nach Anspruch 1, dadurch gekennzeichnet, daß die Reaktion von Chlor mit der cycloaliphatischen Acrylat- oder Methacrylatzusammensetzung bei einer Temperatur im Bereich von —30 bis +50°C durchgeführt wird.

4. Verfahren nach Anspruch 1, dadurch gekennzeichnet, daß die Reaktion in Anwesenheit eines inerten Lösungsmittels durchgeführt wird.

5. 2,3-Dichlor-dicyclopentadien-acrylat.

6. 2,3-Dichlor-dicyclopentadien-methacrylat.

7. Copolymer eines chlorierten cycloaliphatischen Acrylats oder Methacrylats, dadurch gekennzeichnet, daß es aus der Zusammensetzung nach dem Verfahren von Anspruch 1 besteht, copolymerisiert mit einem Acrylat, einem Vinylaromaten, einem Olefin oder Diolefin.

8. Copolymer eines chlorierten cycloaliphatischen Acrylats oder Methacrylats, dadurch gekennzeichnet, daß es aus einer Zusammensetzung, hergestellt nach dem Verfahren von Anspruch 1, besteht, copolymerisiert mit einem ungesättigten Harz, das ein Vinylesterharz enthält, das terminal ungesättigt ist oder ein ungesättigtes Polyesterharz oder ein vinylaromatisches Monomer enthält.

9. Harzzusammensetzung nach Anspruch 8, dadurch gekennzeichnet, daß das ungesättigte Harz ein terminal ungesättigtes Vinylesterharz ist.

10. Harzzusammensetzung nach Anspruch 8, dadurch gekennzeichnet, daß das ungesättigte Harz ein ungesättigtes Polyesterharz ist.